# FASCICULE DE BREVET EUROPEEN

(11) **EP 3 411 919 B1**
(45) Date de publication et mention de la délivrance du brevet: **20.11.2019**
(21) Numéro de dépôt: 17707625.4
(22) Date de dépôt: 03.02.2017
(51) Int. Cl.: H01M 8/0267, H01M 8/0271, H01M 8/04007, H01M 8/04225, H01M 8/04223, H01M 8/04746, H01M 8/04302, H01M 8/04828, H01M 8/0284, H01M 8/0432, H01M 8/04537, H01M 8/04701, H01M 8/04858, H01M 8/04955

(54) **PILE A COMBUSTIBLE ET SYSTÈME DE CHAUFFAGE ASSOCIÉ**
BRENNSTOFFZELLE UND ZUGEHÖRIGES HEIZSYSTEM
FUEL CELL AND ASSOCIATED HEATING SYSTEM

(30) Priorité: 05.02.2016 FR 1650948
(43) Date de publication de la demande: 12.12.2018
(73) Titulaire: Safran Power Units, 31200 Toulouse (FR)
(72) Inventeur: ROMET, Antoine, 27460 Igoville (FR)
(74) Mandataire: Cabinet Beau de Loménie
(86) Numéro de dépôt international: PCT/FR2017/050245
(87) Numéro de publication internationale: WO 2017/134397

(56) Documents cités:
- EP-A1- 2 012 383
- EP-A2- 1 283 558
- WO-A1-03/096462
- US-A1- 2005 058 865
- US-A1- 2010 124 683

## Description

### DOMAINE DE L'INVENTION

Le présent exposé concerne une pile à combustible, et plus particulièrement la régulation thermique de pile à combustible.

### ARRIÈRE-PLAN TECHNOLOGIQUE

Une pile à combustible, aussi appelée pile ou PAC ci-après, comprend une ou plusieurs cellules, chaque cellule mettant en œuvre la réaction d'un oxydant et d'un réducteur pour générer un courant électrique.

Une pile à combustible a généralement un rendement électrique considéré comme faible au regard du rendement obtenu avec d'autres sources de puissance. Il importe donc de maximiser ce rendement en faisant fonctionner la pile à une température optimale. Par ailleurs, pour certaines piles, fonctionner en-dessous d'une certaine température dégrade irrémédiablement les cellules.

Il est donc nécessaire de pouvoir amener la pile à sa température de fonctionnement optimal. Ceci peut nécessiter de chauffer la pile à combustible avant son démarrage, en particulier lorsque la pile à combustible se trouve dans un environnement froid tel qu'un aéronef spatial après son lancement.

Pour ce faire, il est connu de chauffer un fluide en amont de la pile à combustible, par exemple au moyen d'un thermoplongeur, et de faire circuler ce fluide dans la pile pour la réchauffer. Cependant, un tel système est pénalisant en termes de masse et de coût et son efficacité peut être améliorée.

Il existe donc un besoin pour un nouveau type de pile à combustible.

### PRÉSENTATION DE L'INVENTION

A cet effet, le présent exposé concerne une pile à combustible comprenant au moins un joint d'étanchéité, ledit joint d'étanchéité comprenant un corps principal et un organe de chauffage ayant un élément chauffant et une portion d'alimentation, l'élément chauffant étant noyé dans le corps principal et la portion d'alimentation étant accessible depuis l'extérieur du corps principal.

Lorsque la pile à combustible comprend plusieurs joints d'étanchéité, la caractérisation précédente peut concerner l'un desdits joints, une pluralité desdits joints ou bien chacun desdits joints. Par la suite, on présentera un seul joint d'étanchéité, étant entendu que sauf mention contraire, la description qui suit peut s'appliquer à plusieurs ou chaque joints d'étanchéité.

Dire que l'élément chauffant est noyé dans le corps principal signifie que l'élément chauffant est situé à l'intérieur du corps principal, entièrement entouré par le corps principal. L'élément chauffant peut être directement ou indirectement au contact de la matière du corps principal. Ainsi, lorsque l'on considère le joint d'étanchéité de l'extérieur, on ne voit pas l'élément chauffant et ce dernier n'est pas accessible directement depuis l'extérieur du joint d'étanchéité ; en revanche, on voit la portion d'alimentation et cette dernière est accessible depuis l'extérieur du joint d'étanchéité, que la portion d'alimentation soit chauffante ou non. Par conséquent, bien que l'élément chauffant soit noyé dans le corps principal, il est possible de l'alimenter en énergie par l'intermédiaire de la portion d'alimentation.

Le joint d'étanchéité peut être intégré à la pile à combustible à différents endroits, selon la technologie de pile employée. Il peut assurer l'étanchéité entre les différents fluides circulant dans la pile et/ou l'étanchéité avec l'extérieur de la pile. Un exemple sera détaillé par la suite.

Les inventeurs se sont aperçus que les matériaux classiquement utilisés pour les joints d'étanchéité présentaient, en raison des spécifications mêmes qui les rendent aptes à être utilisés dans une pile à combustible, une très grande stabilité thermique, une résistivité thermique très faible et de bonnes qualités d'adhésion au métal et aux polymères. Ces propriétés rendent propice l'intégration d'un organe de chauffage au joint d'étanchéité. Ceci permet une meilleure efficacité du chauffage, ce dernier étant réalisé *in situ,* à l'intérieur même de la pile. En outre, le fait d'intégrer un organe de chauffage au joint d'étanchéité limite l'augmentation de coût et de masse de la pile à combustible.

Dans certains modes de réalisation, l'élément chauffant comprend une résistance électrique. Le chauffage se fait donc par effet Joule et non par circulation de fluide, ce qui simplifie encore la pile à combustible et diminue sa masse.

Dans certains modes de réalisation, la conductivité de la résistance électrique diminue avec la température. En d'autres termes, dans ces modes de réalisation, la résistance électrique est de plus en plus résistante au fur et à mesure que la température augmente. On parle aussi de résistance à coefficient thermique positif, puisque la dérivée partielle de la résistivité par rapport à la température est positive. Ainsi, à tension d'alimentation donnée, la quantité de chaleur dissipée par effet Joule diminue au fur et à mesure que la température augmente. Cela permet de réguler automatiquement et passivement la quantité de chaleur apportée en fonction de la température effective de la pile, ou plus précisément de la température effective du joint d'étanchéité. Le recours à un dispositif de régulation est ainsi évité.

Dans certains modes de réalisation, l'élément chauffant comprend au moins un fil électrique, de préférence un réseau de fils électriques. Un réseau de fils électriques est un ensemble de fils montés en série et/ou en parallèle. Un réseau de fils permet de couvrir davantage de surface qu'un fil unique. Ainsi, le chauffage est plus uniforme et plus rapide. Alternativement ou en complément, l'élément chauffant peut comprendre un tissu sur lequel est déposée une matière électriquement conductrice.

Dans certains modes de réalisation, le corps principal est en élastomère. Des exemples d'élastomères convenant sont des assemblages comprenant au moins l'un des composés suivants : fluoropolymères, perfluoropolymères, néoprènes, nitriles, polyuréthanes. Le corps principal peut être configuré pour résister à la chaleur produite par la pile à combustible après son démarrage.

Dans certains modes de réalisation, le joint d'étanchéité comprend au moins un renfort noyé dans le corps principal. Le renfort permet notamment d'éviter le fluage du corps principal, qui peut être causé par l'augmentation de la température et conduirait à laisser apparaître l'élément chauffant hors du corps principal. Le renfort garantit donc l'intégrité de l'élément chauffant.

Le renfort peut être un renfort purement mécanique et/ou un renfort électriquement isolant.

Dans certains modes de réalisation, le joint d'étanchéité comprend deux renforts noyés dans le corps principal, de part et d'autre de l'élément chauffant. Dans ces modes de réalisation, les renforts ont en particulier une fonction d'isolation électrique.

Le présent exposé concerne également un système de chauffage pour une pile à combustible telle que précédemment décrite, comprenant une source d'énergie destinée à être connectée à la portion d'alimentation et configurée pour alimenter l'organe de chauffage, et un régulateur, le régulateur étant configuré pour commander la source d'énergie en fonction d'une estimation de la température du joint d'étanchéité. Un tel système de chauffage comprenant un régulateur est notamment utile lorsque l'organe de chauffage n'est pas un organe régulé automatiquement tel qu'une résistance à coefficient thermique positif.

Dans certains modes de réalisation, l'élément chauffant comprend une résistance électrique, la source d'énergie comprend une source de courant et le régulateur est configuré pour estimer la température du joint d'étanchéité en fonction d'une caractéristique électrique de la résistance. La caractéristique électrique peut être sélectionnée parmi la résistance, la conductance, l'intensité, la tension, ou toute grandeur électrique calculée à partir des précédentes.

Le régulateur peut être mis en œuvre sous la forme d'un ordinateur exécutant les instructions d'un programme. En conséquence, le présent exposé vise aussi un programme sur un support d'informations, ce programme étant susceptible d'être mis en œuvre dans un régulateur ou plus généralement dans un ordinateur, ce programme comportant des instructions adaptées à la réalisation d'un régulateur configuré comme ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le présent exposé vise aussi un support d'informations lisible par un ordinateur ou par un microprocesseur, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Le présent exposé concerne également un ensemble comprenant une pile à combustible et un système de chauffage de ladite pile à combustible tel que précédemment décrit.

Le présent exposé concerne également un procédé de mise en service d'une pile à combustible telle que précédemment décrite, dans lequel :
- tant que la température de la pile à combustible est strictement inférieure à une température de démarrage, l'organe de chauffage est actionné, la circulation de fluides dans la pile à combustible étant interrompue ;
- lorsque la température de la pile à combustible est supérieure ou égale à la température de démarrage, la pile à combustible est démarrée.

La circulation de fluides interrompue fait référence aussi bien à la circulation des réactifs que du fluide de refroidissement ou d'un éventuel fluide plus chaud que la pile et destiné à réchauffer cette dernière.

Selon sa nature et sa régulation, l'organe de chauffage peut être éteint ou non lorsque la pile à combustible est démarrée ou atteint la température de démarrage.

La température de la pile à combustible peut être mesurée en un point représentatif ou représenter une moyenne de la température mesurée en plusieurs points de la pile.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente schématiquement et de manière éclatée une pile à combustible selon un premier mode de réalisation ;
- la figure 2 est une vue en coupe d'un joint d'étanchéité tel qu'utilisé dans la pile à combustible de la figure 1 ;
- la figure 3 représente schématiquement et de manière éclatée la structure du joint d'étanchéité de la figure 2 selon un mode de réalisation ;
- la figure 4 représente schématiquement et de manière éclatée la structure du joint d'étanchéité de la figure 2 selon un autre mode de réalisation ;
- la figure 5 est une vue schématique d'un système de chauffage pour une pile à combustible.

### DESCRIPTION DÉTAILLÉE DE L'INVENTION

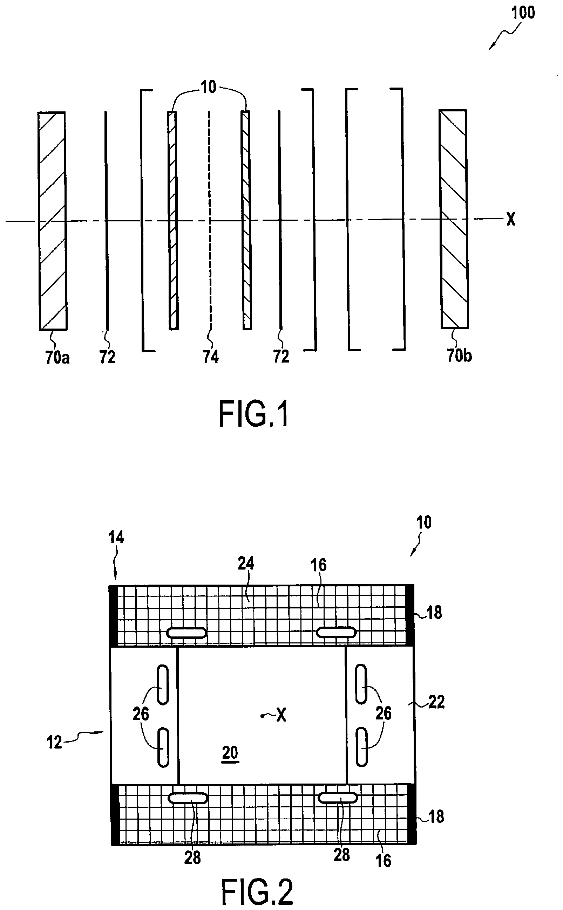

La figure 1 représente schématiquement et de manière éclatée une pile à combustible 100 selon un premier mode de réalisation. Dans ce mode de réalisation, la pile à combustible est de type à membrane échangeuse de protons. Une telle pile à combustible comprend deux plaques externes 70a, 70b entre lesquelles sont empilées des cellules selon une direction d'empilement X. Chaque cellule comprend, dans l'ordre (de gauche à droite sur la figure 1), une première plaque bipolaire 72, un joint 10, une membrane électroactive 74, un autre joint 10 et une deuxième plaque bipolaire 72. Les joints d'étanchéité 10 sont notamment utilisés pour séparer et réaliser l'étanchéité entre les plaques bipolaires 72 et les membranes électroactives 74. Le rôle des plaques bipolaires 72 est de distribuer les réactifs et, le cas échéant, le fluide caloporteur qui refroidit la pile lorsque ladite pile a atteint son régime de fonctionnement nominal. Les membranes électroactives 74, ou membranes échangeuses de protons, ont pour rôle de bloquer le passage des électrons tout en permettant le passage des protons. Ainsi, les électrons sont contraints de passer par un circuit électrique externe à l'empilement de cellules. Les réactifs sont en général l'oxygène, par exemple sous forme d'air contenant du dioxygène, et l'hydrogène, par exemple sous forme de dihydrogène gazeux.

Les couches situées entre crochets sur la figure 1, à savoir dans l'ordre (de gauche à droite sur la figure 1) un joint 10, une membrane électroactive 74, un autre joint 10 et une plaque bipolaire 72, peuvent être répétées dans cet ordre autant que souhaité pour augmenter le nombre de cellules et la puissance de la pile 100.

La figure 2 détaille une vue en coupe d'un des joints d'étanchéité 10. Dans le présent mode de réalisation, tous les joints d'étanchéité 10 sont identiques mais il pourrait en être différemment.

Comme indiqué précédemment, le joint d'étanchéité 10 comprend un corps principal 12. Le corps principal 12 est ici en élastomère. Le corps principal 12 présente par exemple une forme générale rectangulaire dans laquelle est prévu un évidement 20. L'évidement 20 forme un conduit facilitant l'homogénisation de la température dans la pile à combustible 100 et permettant la migration des espèces chimiques vers la membrane électroactive 74.

Par ailleurs, le joint d'étanchéité 10 comprend un organe de chauffage 14. L'organe de chauffage 14 comprend lui-même un élément chauffant 16 et une portion d'alimentation 18. L'élément chauffant 16 prend ici la forme d'un réseau de fils électriques, typiquement de diamètre de l'ordre du dixième de millimètre. Lesdits fils électriques ont une résistance non nulle et forment ainsi une résistance électrique. Au sein du réseau, les fils peuvent être branchés les uns aux autres en série, en parallèle, ou en tout arrangement possible.

Dans le présent mode de réalisation, une pluralité de fils sont montés en parallèle entre deux bornes formant portion d'alimentation 18. Cette pluralité de fils peut être obtenue à partir d'un tissu comprenant une matrice de fils parallèles, à l'intérieur duquel on découpe, par exemple à l'emporte-pièce ou au laser, une forme adaptée à son insertion dans le corps principal 12 du joint d'étanchéité 10.

Dans cet exemple, pour obtenir un branchement plus simple, ladite forme adaptée est telle que des premières parties latérales opposées 22 du corps principal 12 sont dépourvues de fils électriques. Des deuxièmes parties latérales opposées 24 du corps principal 12 sont munies de fils électriques.

Alternativement, des fils peuvent s'étendre sur les premières et deuxièmes parties latérales opposées 22, 24. Cela facilite encore la fabrication du joint d'étanchéité 10. Dans ce cas, les fils situés sur les premières parties latérales opposées 22 peuvent ne pas être alimentés.

Alternativement encore, l'élément chauffant 16 peut être constitué d'un fil unique arrangé au sein du corps principal 12.

Alternativement encore, l'organe de chauffage 14 peut comprendre un substrat, par exemple en élastomère, sur lequel est déposée une couche métallique conductrice formant élément chauffant 16.

Alternativement encore, l'organe de chauffage 14 peut comprendre un tissu conducteur, comprenant lui-même un élément chauffant 16 tel que des fibres de carbone. Un exemple d'un tel tissu est le tissu THERMION (marque déposée) commercialisé par la société américaine Thermion Systems International, Inc.

Dans le cas d'un fil unique que d'un réseau de fils, le ou les fils peuvent parcourir un ou plusieurs côtés, par exemple selon un parcours en serpentin ou en zigzag.

Comme indiqué précédemment, l'élément chauffant 16 est noyé dans le corps principal 12 et la portion d'alimentation 18 est accessible depuis l'extérieur du corps principal 12. Ainsi, bien que l'élément chauffant 16 soit noyé dans le corps principal 12, il est possible de l'alimenter en énergie (ici électrique) par l'intermédiaire de la portion d'alimentation 18. Dans le cas où l'élément chauffant 16 comprend une résistance électrique, le joint d'étanchéité 10 peut comprendre au moins deux portions d'alimentations 18 correspondant à deux bornes électriques.

Le joint d'étanchéité 10 comporte par ailleurs des conduits 26, 28, pour les passages respectifs des réactifs de la pile à combustible 100 et du fluide de refroidissement. Par exemple, sur les huit conduits 26, 28 représentés sur la figure 2, quatre peuvent être affectés au passage des réactifs et quatre peuvent être affectés au passage du fluide de refroidissement. Les dimensions de ces conduits 26, 28 peuvent varier selon leur fonction. Par exemple, les conduits prévus pour le passage du fluide de refroidissement peuvent être de section plus petite que les conduits prévus pour le passage des réactifs.

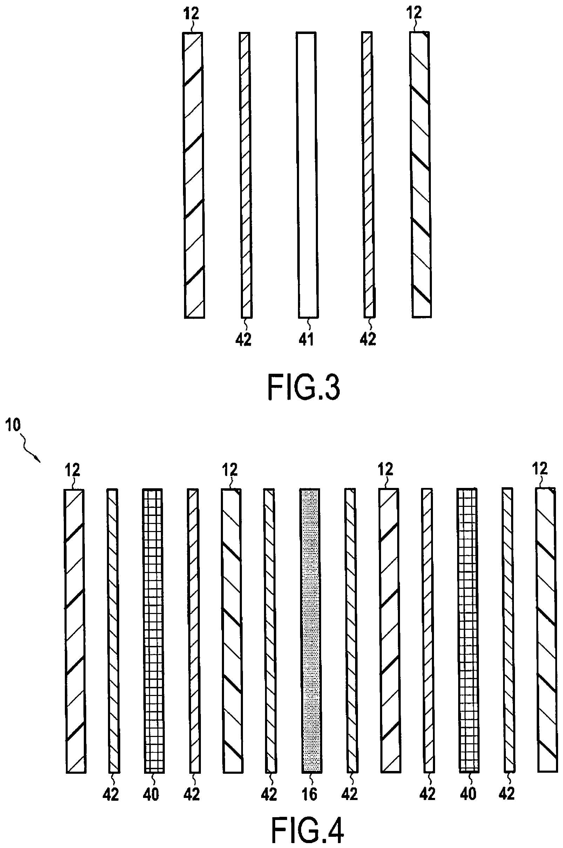

Les figures 3 et 4 présentent schématiquement et de manière éclatée la structure du joint d'étanchéité de la figure 2. Dans ces modes de réalisation, le joint d'étanchéité 10 comprend au moins un renfort 40 noyé dans le corps principal 12.

Selon un mode de réalisation représenté sur la figure 3, le renfort 40 est partie intégrante d'un tissu technique 41 comprenant également l'élément chauffant 16, par exemple sous forme de grille électrique, de fibres conductrices, ou sous l'une quelconque des formes présentées précédemment. Des couches de liant 42 sont prévues entre le tissu technique 41 et le corps principal 12, à l'intérieur du corps principal 12. Le liant 42, aussi appelé dissolution, peut comprendre de l'élastomère ainsi qu'un dissolvant de type acétone.

Selon un autre mode de réalisation représenté sur la figure 4, le joint d'étanchéité 10 comprend deux renforts 40 situés de part et d'autre de l'élément chauffant 16.

Une partie du corps principal 12 se trouve entre le renfort 40 et l'élément chauffant 16. Ici, ladite partie du corps principal 12 sépare le renfort 40 de l'élément chauffant 16. En outre, des couches de liant 42 peuvent être prévues entre l'élément chauffant 16 et le corps principal 12 et/ou entre le renfort 40 et le corps principal 12 pour renforcer le maintien de l'élément chauffant 16 et/ou du renfort 40, respectivement, à l'intérieur du corps principal.

En l'espèce, le renfort 40 est prévu sous la forme d'un tissu, notamment un tissu quasi-transparent dont l'épaisseur est de l'ordre de la fraction de millimètre (quelques centaines de microns) et la densité de l'ordre du gramme par mètre carré. Ainsi, le renfort 40 a un impact négligeable sur les propriétés thermiques du corps principal 12. En revanche, le renfort 40 renforce la résistance du corps principal au fluage et empêche tout contact entre l'élément chauffant 16, ici métallique, et les plaques bipolaires 72, évitant ainsi l'apparition de courts-circuits dans la pile 100.

De tels tissus sont connus en soi. Un exemple d'un tel renfort 40 est par exemple en polyamide.

Comme indiqué précédemment, la résistance électrique de l'élément chauffant 16 peut être faite d'un matériau dont la conductivité diminue avec la température. De tels matériaux, dont la dérivée partielle de la résistance électrique par rapport à la température est positive, sont par exemple des céramiques, notamment des céramiques comprenant du BaTiO₃ ou composées principalement, voire exclusivement de BaTiO₃. Ainsi, lorsque la température de la pile 100 augmente, à alimentation électrique constante, les pertes par effet Joule dans l'élément chauffant 16 diminuent. Il est possible de dimensionner la résistance électrique de manière appropriée, par exemple en faisant varier la longueur et la section des fils électriques, de sorte que les pertes par effet Joule deviennent négligeables, typiquement de l'ordre de quelques Watts, lorsque la pile atteint une température convenant à son démarrage.

Il est également possible de mettre en œuvre une résistance électrique ayant un coefficient de température négatif. Dans ce cas, une régulation est nécessaire pour réguler l'énergie dissipée par effet Joule dans l'élément chauffant 16. Cette régulation peut également être utilisée avec une résistance ayant un coefficient de température positif.

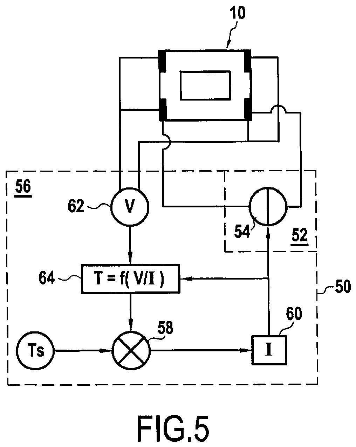

A cet effet, la figure 5 illustre un système de chauffage 50 pour une pile à combustible telle que la pile 100. On n'a représenté de la pile 100 qu'un joint d'étanchéité 10, de manière simplifiée. Comme indiqué précédemment, le système de chauffage 50 comprend une source d'énergie 52 connectée à la portion d'alimentation 18 et configurée pour alimenter l'organe de chauffage 14. En l'espèce, la source d'énergie 52 comprend une source de courant 54. La source de courant 54 est connectée aux portions d'alimentations 18 de façon à alimenter l'organe de chauffage 14, et plus particulièrement l'élément chauffant 16, de sorte que l'élément chauffant 16 dégage de la chaleur. La source de courant 54 peut être un générateur de tension.

Par ailleurs, le système de chauffage 50 comprend un régulateur 56 configuré pour commander la source d'énergie 52 en fonction d'une estimation de la température T du joint d'étanchéité 10. Par exemple, le régulateur 56 peut diminuer la puissance fournie par la source d'énergie 52 au fur et à mesure que la température augmente. Alternativement ou en complément, le régulateur 56 peut arrêter la source d'énergie 52 lorsque la température estimée T atteint une température de démarrage Ts de la pile à combustible 100, et/ou démarrer la source d'énergie 52 lorsque la température estimée T est inférieure à la température de démarrage Ts et qu'un démarrage de la pile à combustible 100 est requis.

Pour une pile du type de celle du présent mode de réalisation, la température Ts peut être de l'ordre de 200°C.

En l'espèce, le régulateur 56 est configuré pour estimer la température T du joint d'étanchéité 10 en fonction d'une caractéristique électrique de la résistance.

Plus précisément, dans ce mode de réalisation, le régulateur 56 comprend des moyens de mesure 62 configurés pour mesurer une caractéristique électrique de la résistance. Ici, la caractéristique électrique est la tension V aux bornes de la résistance, c'est-à-dire par exemple entre deux portions d'alimentation 18. Les moyens de mesure 62 peuvent être omis lorsque la caractéristique électrique peut être connue par un autre moyen ; par exemple, en l'occurrence, la tension V entre les deux portions d'alimentation 18 correspond à la tension d'alimentation de la source de courant 54 et peut être accessible plus simplement en tant que telle.

Le régulateur 56 comprend en outre des moyens d'estimation 64 configurés pour estimer la température T du joint d'étanchéité 10 à partir de la caractéristique électrique mesurée par les moyens de mesure 62. En l'occurrence, le courant I d'alimentation de l'organe de chauffage 14 et la tension V aux bornes de l'organe de chauffage 14 étant connus, la température T est déterminée comme égale à f(V/I), où V/I est la résistance de l'organe de chauffage 14 et f est la fonction réciproque de la fonction donnant la résistance en fonction de la température pour l'organe de chauffage 14. La fonction f peut être calculée analytiquement, numériquement ou estimée empiriquement par des moyens connus de l'homme du métier.

Un comparateur 58 compare ensuite la température estimée T et la température de démarrage Ts, qui est prédéterminée en fonction des caractéristiques de la pile à combustible 100. Un dispositif de commande 60 adapte alors le courant I en fonction d'une loi de commande prédéterminée, par exemple comme indiqué précédemment. La valeur de commande du courant I est fournie au dispositif d'estimation pour le calcul de la température estimée T. La valeur de commande du courant I est fournie à la source d'énergie 52 qui alimente à son tour l'organe de chauffage 14 avec ledit courant.

Que l'élément chauffant 16 ait une résistance à coefficient thermique positif ou négatif, il est possible de mettre en œuvre le procédé suivant pour chauffer la pile à combustible :
- tant que la température T de la pile à combustible 100 est inférieure à la température de démarrage Ts, l'organe de chauffage 14 est actionné, la circulation de fluides dans la pile à combustible 100 étant interrompue ;
- lorsque la température T de la pile à combustible 100 atteint la température de démarrage Ts, la pile à combustible 100 est démarrée.

La réaction qui se produit dans la pile à combustible est exothermique, si bien qu'une fois la pile démarrée, sa température augmente naturellement. Il n'est alors plus nécessaire d'avoir recours à l'organe de chauffage 12 pour réchauffer la pile 100. L'organe de chauffage 12 peut donc être désactivé.

Dans la mesure où la circulation des fluides, notamment des réactifs et du fluide de refroidissement, est interrompue tant que la température de la pile 100 est inférieure à la température de démarrage Ts, il est raisonnable de supposer que la pile est homogène en température. Si, comme dans le présent mode de réalisation, les joints d'étanchéité 10 sont tous identiques, alors le chauffage de la pile 100 par les organes de chauffage 14 respectifs est spatialement homogène. Par conséquent, la température de la pile à combustible peut être approximée, sans grande perte de précision, comme étant égale à la température d'un joint d'étanchéité 10, sélectionné arbitrairement. La température d'un tel joint d'étanchéité 10 peut être estimée comme présenté précédemment, à partir d'une caractéristique électrique.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Pile à combustible (100) comprenant au moins un joint d'étanchéité (10), ledit joint d'étanchéité (10) comprenant un corps principal (12) et un organe de chauffage (14) ayant un élément chauffant (16) et une portion d'alimentation (18), l'élément chauffant (16) étant noyé dans le corps principal (12) et la portion d'alimentation (18) étant accessible depuis l'extérieur du corps principal (12).

2. Pile à combustible (100) selon la revendication 1, dans laquelle l'élément chauffant comprend une résistance électrique.

3. Pile à combustible (100) selon la revendication 2, dans laquelle la conductivité de la résistance électrique diminue avec la température.

4. Pile à combustible (100) selon l'une quelconque des revendications 1 à 3, dans laquelle l'élément chauffant comprend au moins un fil électrique, de préférence un réseau de fils électriques.

5. Pile à combustible (100) selon l'une quelconque des revendications 1 à 4, le corps principal étant en élastomère.

6. Pile à combustible (100) selon l'une quelconque des revendications 1 à 5, dans laquelle le joint d'étanchéité (10) comprend au moins un renfort (40) noyé dans le corps principal (12).

7. Système de chauffage (50) pour une pile à combustible (100) selon l'une quelconque des revendications 1 à 6, comprenant une source d'énergie (52) configurée pour être connectée à la portion d'alimentation (18) et configurée pour alimenter l'organe de chauffage (14), et un régulateur (56), le régulateur (56) étant configuré pour commander la source d'énergie (52) en fonction d'une estimation de la température (T) du joint d'étanchéité (10).

8. Système de chauffage selon la revendication 7, dans lequel l'élément chauffant (16) comprend une résistance électrique, la source d'énergie (52) comprend une source de courant (54) et le régulateur (56) est configuré pour estimer la température (T) du joint d'étanchéité (10) en fonction d'une caractéristique électrique (V) de la résistance.

9. Ensemble (50, 100) comprenant une pile à combustible (100) et un système de chauffage (50) de ladite pile à combustible (100) selon la revendication 7 ou 8.

10. Procédé de mise en service d'une pile à combustible (100) selon l'une quelconque des revendications 1 à 6, dans lequel :
- tant que la température (T) de la pile à combustible (100) est strictement inférieure à une température de démarrage (Ts), l'organe de chauffage (14) est actionné, la circulation de fluides dans la pile à combustible (100) étant interrompue ;
- lorsque la température (T) de la pile à combustible (100) est supérieure ou égale à la température de démarrage (Ts), la pile à combustible (100) est démarrée.

## Patentansprüche

1. Brennstoffzelle (100), die zumindest eine Ringdichtung (10) umfasst, wobei die Ringdichtung (10) einen Hauptkörper (12) und ein Heizglied (14) umfasst, das ein Heizelement (16) und einen Versorgungsabschnitt (18) aufweist, wobei das Heizelement (16) in den Hauptkörper (12) eingelassen ist und der Versorgungsabschnitt (18) von außerhalb des Hauptkörpers (12) zugänglich ist.

2. Brennstoffzelle (100) nach Anspruch 1, wobei das Heizelement einen elektrischen Widerstand umfasst.

3. Brennstoffzelle (100) nach Anspruch 2, wobei die Leitfähigkeit des elektrischen Widerstands mit der Temperatur abnimmt.

4. Brennstoffzelle (100) nach einem der Ansprüche 1 bis 3, wobei das Heizelement zumindest einen elektrischen Draht, vorzugsweise ein Netz aus elektrischen Drähten, umfasst.

5. Brennstoffzelle (100) nach einem der Ansprüche 1 bis 4, wobei der Hauptkörper aus einem Elastomer besteht.

6. Brennstoffzelle (100) nach einem der Ansprüche 1 bis 5, wobei die Ringdichtung (10) zumindest eine Verstärkung (40) umfasst, die in den Hauptkörper (12) eingelassen ist.

7. Heizsystem (50) für eine Brennstoffzelle (100) nach einem der Ansprüche 1 bis 6, das eine Energiequelle (52), die dazu ausgestaltet ist, mit dem Versorgungsabschnitt (18) verbunden zu werden, und dazu ausgestaltet ist, das Heizglied (14) zu versorgen, und einen Regler (56) umfasst, wobei der Regler (56) dazu ausgestaltet ist, die Energiequelle (52) in Abhängigkeit von einer Schätzung der Temperatur (T) der Ringdichtung (10) zu steuern.

8. Heizsystem nach Anspruch 7, wobei das Heizelement (16) einen elektrischen Widerstand umfasst, die Energiequelle (52) eine Stromquelle (54) umfasst und der Regler (56) dazu ausgestaltet ist, die Temperatur (T) der Ringdichtung (10) in Abhängigkeit von einer elektrischen Eigenschaft (V) des Widerstands zu schätzen.

9. Anordnung (50, 100), die eine Brennstoffzelle (100) und ein Heizsystem (50) der Brennstoffzelle (100) nach Anspruch 7 oder 8 umfasst.

10. Verfahren zur Inbetriebnahme einer Brennstoffzelle (100) nach einem der Ansprüche 1 bis 6, wobei:
- wenn die Temperatur (T) der Brennstoffzelle (100) deutlich unter einer Starttemperatur (Ts) liegt, das Heizglied (14) betätigt wird, wobei die Zirkulation von Fluiden in der Brennstoffzelle (100) unterbrochen wird,
- wenn die Temperatur (T) der Brennstoffzelle (100) höher oder gleich der Starttemperatur (Ts) ist, die Brennstoffzelle (100) gestartet wird.

## Claims

1. A fuel cell (100) including at least one sealing gasket (10), said sealing gasket (10) comprising a main body (12) and a heater member (14) having a heater element (16) and a power supply portion (18), the heater element (16) being embedded in the main body (12) and the power supply portion (18) being accessible from outside the main body (12).

2. A fuel cell (100) according to claim 1, wherein the heater element comprises an electrical resistance.

3. A fuel cell (100) according to claim 2, wherein the conductivity of the electrical resistance decreases with increasing temperature.

4. A fuel cell (100) according to any one of claims 1 to 3, wherein the heater element comprises at least one electric wire, preferably a network of electric wires.

5. A fuel cell (100) according to any one of claims 1 to 4, the main body being made of elastomer.

6. A fuel cell (100) according to any one of claims 1 to 5, wherein the sealing gasket (10) includes at least one piece of reinforcement (40) embedded in the main body (12) .

7. A heater system (50) for heating a fuel cell (100) according to any one of claims 1 to 6, the heater system comprising both an energy source (52) configured to be connected to the power supply portion (18) and configured to power the heater member (14), and also a regulator (56), the regulator (56) being configured to control the energy source (52) as a function of an estimate of the temperature (T) of the sealing gasket (10).

8. A heater system according to claim 7, wherein the heater element (16) comprises an electrical resistance, the energy source (52) comprises an electricity source (54), and the regulator (56) is configured to estimate the temperature (T) of the sealing gasket (10) as a function of an electrical characteristic (V) of the resistance.

9. An assembly (50, 100) comprising a fuel cell (100) and a heater system (50) according to claim 7 or claim 8 for heating said fuel cell (100).

10. A method of putting into operation a fuel cell (100) according to any one of claims 1 to 6, wherein:
• so long as the temperature (T) of the fuel cell (100) is strictly less than a starting temperature (Ts), the heater member (14) is actuated, with the flow of fluids through the fuel cell (100) being interrupted; and
• when the temperature (T) of the fuel cell (100) is greater than or equal to the starting temperature (Ts), the fuel cell (100) is started.
